# EUROPEAN PATENT APPLICATION

(11) **EP 2 458 597 A1**
(43) Date of publication of application: **30.05.2012**
(21) Application number: 11189587.6
(22) Date of filing: 17.11.2011
(51) Int. Cl.: H01C 7/112, H01C 7/18

(54) **Process for producing multilayer chip zinc oxide varistor containing pure silver internal electrodes and firing at ultralow temperature**

(30) Priority: 26.11.2010 TW 099141024
(71) Applicant: SFI Electronics Technology Inc., Guishan Shiang, Taoyuan County (TW)
(72) Inventor: Lien, Ching-Hohn, 333 Guishan Shiang, Taoyuan County (TW); Zhu, Jie-An, 333 Guishan Shiang, Taoyuan County (TW)
(74) Representative: Beck & Rössig European Patent Attorneys

(57) **Abstract**

A low-temperature firing process is available for cost saving to produce a multilayer chip ZnO varistor containing pure silver (Ag) formed as internal electrodes and calcined at ultralow firing temperature of 850-900°C, which process comprises:
a) individually preparing ZnO grains in advance doped with doping ions for promotion of semi-conductivity of ZnO grains if calcined;
b) individually preparing a desired high-impedance sintering material to be fired as grain boundaries to encapsulate ZnO grains;
c) mixing the doped ZnO grains of Step a) with the high-impedance sintering material of Step b) in a predetermined ratio to form a mixture and proceeding with an initial sintering to have the mixture sintered and ground as composite ZnO ceramic powders, and
d) processing the sintered mixture of Step c) to make multilayer chip ZnO varistors containing pure silver (Ag) internal electrodes but sintered at ultralow firing temperature of 850-900°C.

## Description

### BACKGROUND OF THE INVENTION

### 1. Field of the Invention

The present invention relates to a process for producing multilayer chip zinc oxide (ZnO) varistor containing pure silver (Ag) formed as internal electrodes, more particularly to a process for producing the multilayer chip zinc oxide (ZnO) varistor at ultralow firing temperature of 850-900°C.

### 2. Description of Prior Art

Traditionally, a zinc oxide (ZnO) varistor is made by sintering zinc oxide, together with other oxides, such as antimony oxide, silicon oxide, cobalt oxide, manganese oxide and chrome oxide, at a firing temperature higher than 1000°C. During sintering, semi-conductivity of the ZnO grains increases due to the doping of Sb, Si, Co, Mn and Cr while a crystalline phase of high-impedance grain boundaries is deposited among the ZnO grains.

Therefore, a conventional process for producing ZnO varistors is only disclosed a single sintering procedure to accomplish the following two purposes for a long time:
1. One purpose involves both growth of ZnO grains and doping of ZnO with doping ions to enhance semi-conductivity of the ZnO grains; and
2. the other purpose involves depositing of the high-impedance grain boundaries to encapsulate the ZnO grains to endow the resultant ZnO varistors with non-ohmic characteristics, since these boundaries are responsible for blocking conduction at low voltages and are the source of the nonlinear electrical conduction at higher voltages.

In other words, the conventional ZnO varistor principally depends on the semi-conductivity of ZnO grains and the high-impedance grain boundaries among the ZnO grains to present its excellent surge-absorbing ability, superior non-ohmic characteristics and better current impact resistance.

Nevertheless, since formation of the high-impedance grain boundaries processed in the above-mentioned conventional process requires a relatively higher firing temperature than 1000°C or more, the shortcoming of the conventional process for producing ZnO varistors is that properties of the resultant ZnO varistor are less adjustable. For example, in the sintering procedure, the applicable species and quantity of ions for doping ZnO grains are relatively restricted. Consequently, properties of the resultant ZnO varistor, including breakdown voltage, nonlinear coefficient, C value, leakage current, surge-absorbing ability, and ESD-absorbing ability, are restricted. Similarly, in the sintering procedure, formation of the high-impedance grain boundaries among the ZnO grains also faces restriction. Hence, because selectiveness of composition and quantity of the high-impedance grain boundaries is limited, improvement in technical conditions of the resultant ZnO varistors is unachievable and properties of the resultant ZnO varistors are rather inflexible.

In particular, the current multilayer chip ZnO varistor in market is commonly used a silver/palladium alloy (containing 70wt% silver and 30wt% palladium) formed as an internal electrode, resulted in that the firing temperature is reached to a comparatively high temperature of 1000°C-1300°C. Since the multilayer chip ZnO varistor must use 20-30wt% palladium (Pd) and be fired at relatively high temperature, the manufacturing cost is rather high. Consequently, there is a need for producing the multilayer chip ZnO varistor at ultralow firing temperature to resolve the issue.

### SUMMARY OF THE INVENTION

An object of the present invention is to provide a low-temperature firing process for producing multilayer chip ZnO varistor, and particularly, through the process of the present invention pure silver (Ag) can be formed as internal electrodes of the multilayer chip ZnO varistor, and more particularly the process for producing multilayer chip ZnO is capably fired at ultralow firing temperature of 850-900°C for cost saving.

The term "ultralow firing temperature" as used herein means that sintering can be proceeded at a temperature below the melting point of silver (961°C).

According to the present invention disclosed, the multilayer chip ZnO varistor may contain pure silver (Ag) formed as internal electrodes and the pure silver (Ag) internal electrodes can still provide excellent chemical stability during sintering at firing temperature of 850-900°C below the melting point of silver, so that the process for producing multilayer chip ZnO varistor of the present invention has completely improved the known conventional process for producing multilayer chip ZnO varistor commonly disclosed to exploit a silver/palladium alloy formed as an internal electrode.

A key feature of the process for producing multilayer chip ZnO varistor disclosed is to separate "procedure of performing the doping of zinc oxide" from "procedure of preparing high-impedance sintering material" and enter them into two separately independent procedures, respectively. Accordingly, the process for producing multilayer chip ZnO varistor of the present invention comprises:
a) individually preparing ZnO grains in advance doped with doping ions;
b) individually preparing a desired high-impedance sintering material (or glass powder);
c) mixing the doped ZnO grains of Step a) with the high-impedance sintering material of Step b) in a predetermined ratio to form a mixture and proceeding with an initial sintering to have the mixture sintered and ground as composite ZnO ceramic powders, and
d) processing the sintered mixture of Step c) to make multilayer chip ZnO varistors containing pure silver (Ag) internal electrodes but sintered at ultralow firing temperature of 850-900°C.

The process for producing multilayer chip ZnO varistor of the present invention possesses two unexpected effects as followed:
1. by proper selection of high-impedance sintering material to be sintered as ZnO grain boundaries, a multilayer chip ZnO varistor capably takes pure silver (Ag) formed as internal electrodes and sintered at ultralow firing temperature of 850-900°C is then realized; this is an important breakthrough in multilayer chip ZnO varistor, since a prejudiced view of conventional process for producing multilayer chip ZnO varistor is always regarded the firing temperature must exceed 1000°C or more so that internal electrodes of the multilayer chip ZnO varistor can not be made of pure silver (Ag); and
2. according to the same reason mentioned above, an effective reduction of manufacture cost for producing multilayer chip ZnO varistor is also realized.

### BRIEF DESCRIPTION OF THE DRAWINGS

FIG. 1 is a flow chart to illustrate an inventive process for producing a multilayer chip ZnO varistor containing pure silver (Ag) formed as internal electrodes and sintered at ultralow firing temperature of 850-900°C;
FIG. 2 shows the X-ray diffraction pattern of ZnO;
FIG. 3a and FIG. 3b shows the X-ray diffraction pattern of ZnO doped with 2mol% of Si or Y irons respectively;
FIG. 4 is a partially cross-sectional view of a multilayer chip ZnO varistor containing two interleaved layers of pure silver (Ag) internal electrodes produced by the process of the present invention;
FIG. 5 is a partially cross-sectional view of a multilayer chip ZnO varistor containing thee interleaved layers of pure silver (Ag) internal electrodes produced by the process of the present invention;; and
FIG. 6 is a partially cross-sectional view of a multilayer chip ZnO varistor containing five interleaved layers of pure silver (Ag) internal electrodes produced by the process of the present invention.

### DETAILED DESCRIPTION OF THE PREFERRED EMBODIMENT

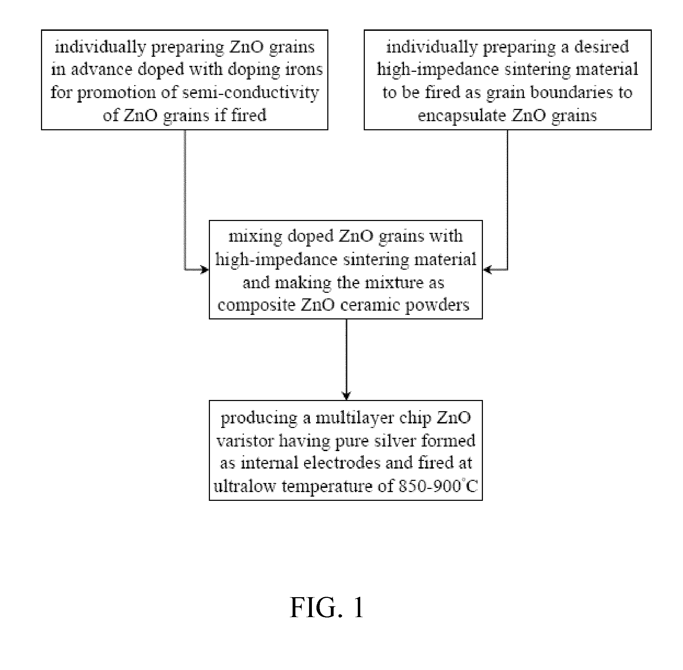

According to the present invention, a process for producing multilayer chip ZnO varistors containing pure silver (Ag) internal electrodes is disclosed as shown in FIG. 1, and through the disclosed process the multilayer chip ZnO varistor is capably sintered at ultralow firing temperature of 850-900°C to allow pure silver (Ag) to be formed as internal electrodes and still provided with excellent chemical stability during sintering.

Shown in FIG. 1, the disclosed process for producing multilayer chip ZnO varistors of the present invention is mainly to separate "a procedure of performing the doping of zinc oxide" from "a procedure of preparing high-impedance sintering material" and to allow each procedure to become an individually independent procedure for producing multilayer chip ZnO varistors.

Accordingly, the disclosed process of the present invention is obviously distinct from that of the above-mentioned conventional process which utilizes a single sintering procedure to simultaneously accomplish both "semi-conductivity of ZnO grains" and "ZnO grains encapsulated by high-impedance grain boundaries".

The disclosed process for producing multilayer chip ZnO varistors of the present invention comprises the following steps:
a) individually preparing ZnO grains in advance doped with doping ions to have doped ZnO grains, if fired, possessed a sufficient semi-conductivity;
b) individually preparing a desired high-impedance sintering material (or glass powder) to be fired as grain boundaries to encapsulate doped ZnO grains of Step a);
c) mixing the doped ZnO grains of Step a) with the high-impedance sintering material of Step b) into a mixture based on a predetermined ratio; processing the mixture into composite ZnO ceramic powders after through an initial sintering and a finely grinding later; and preparing a slurry composed of the powders combined with a binder and a solvent for producing green sheet(s); and
d) through a known conventional process of taping casting, screen printing, stacking and sintering technique to produce a multilayer chip ZnO varistors containing pure silver (Ag) internal electrodes but sintered at ultralow firing temperature of 850-900°C.

More details to the process for producing multilayer chip ZnO varistors of the present invention will be further expounded hereinafter.

### a. Individually preparing ZnO grains in advance doped with doping Ions

For promotion of semi-conductivity of ZnO grains, the ZnO grains may be doped with one or more species of ions. Therein, quantity of the doping ion(s) is preferably less than 10mol% of ZnO, and more preferably less than 2mol% of ZnO.

The doping ion(s) capably doped to ZnO grains is one or more selected from the group consisting of Ag, Li, Cu, Al, Ce, Co, Cr, In, Ga, La, Y, Nb, Ni, Pr, Sb, Se, Ti, V, W, Zr, Si, Fe and Sn.

There are two approaches to prepare ZnO grains doped with doping ions. One approach is applicable to nanotechnology, such as the coprecipitation method or the sol-gel process. By this approach, a solution containing zinc ions and another solution containing doping ions are prepared based on the principles of crystallography. Then nanotechnology of coprecipitation method or sol-gel process is applied to obtain a precipitate. The precipitate then undergoes thermal decomposition so that ZnO grains doped with the doping ions are obtained.

The solution containing zinc ions may be zinc acetate or zinc nitrate. The solution containing doping ions may be made by dissolving one or more species of said doping ions in acetate or nitrate.

Then the solution containing zinc ions and the solution containing doping ions are mixed and stirred to form a blended solution containing zinc ions and doping ions by means of the chemical coprecipitation method. While mixing, a surfactant or a high polymer may be added according to practical needs. Then a precipitant is added into the blended solution during stir in a co-current or counter-current manner. Through proper adjustment of the pH value of the solution, a co-precipitate is obtained. After repeatedly washed and then dried, the co-precipitate is calcined at proper temperature so that ZnO grains doped with the doping ions are obtained.

The aforementioned precipitant may be selected from the group consisting of oxalic acid, carbamide, ammonium carbonate, ammonium hydrogen carbonate, ammonia, or other alkaline solutions.

Another approach to making doped ZnO grains involves directly immersing fine ZnO powder into a solution containing doping ions. After the ZnO powder covered with doping ions is dried, the doping ZnO powder is calcined in air for a thermal decomposition, and finally ground into a predetermined diameter to form ZnO grains doped with doping ions.

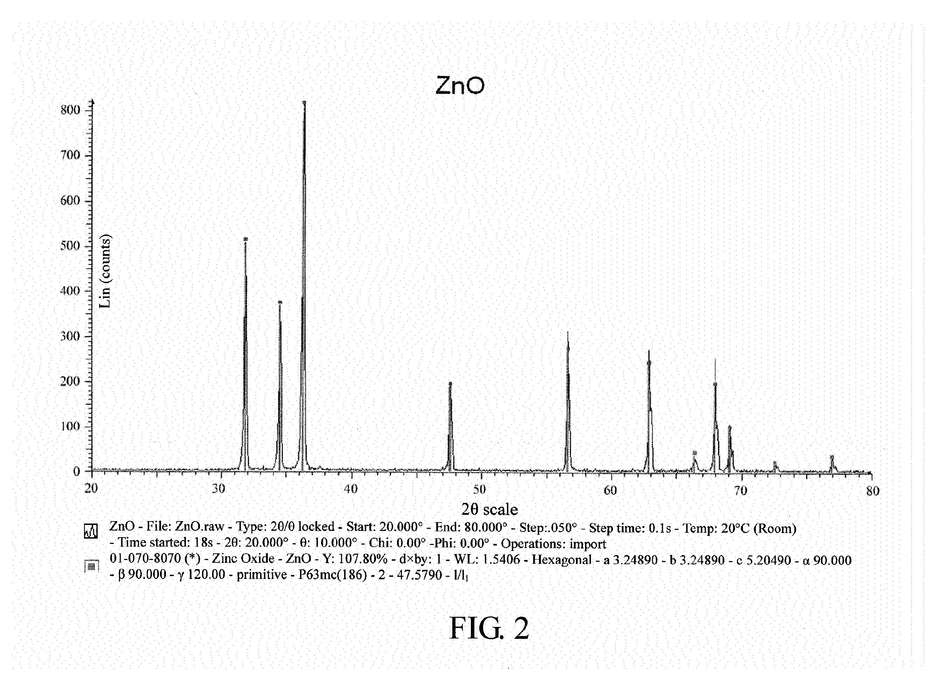

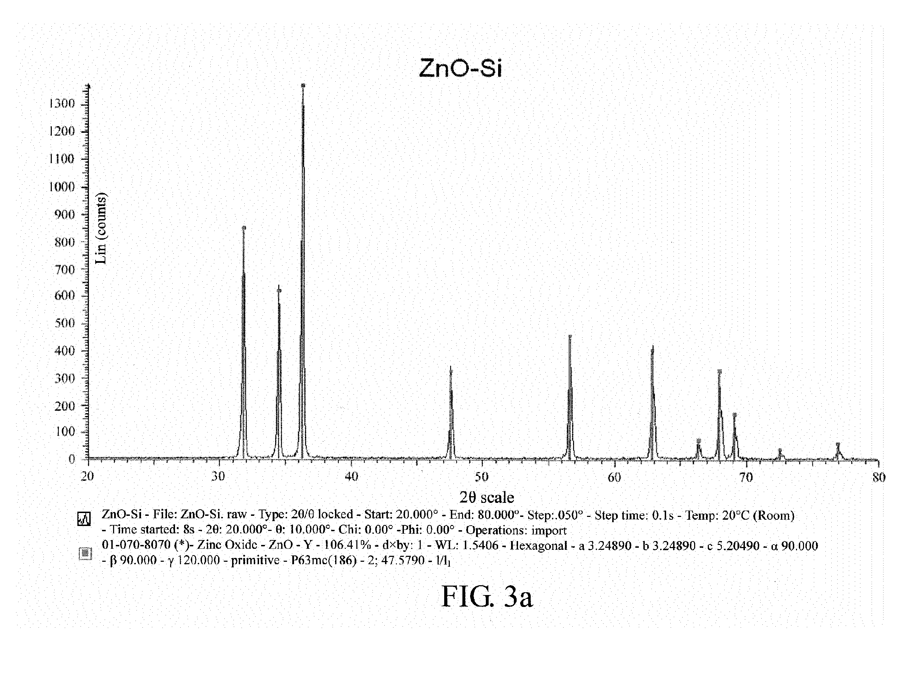

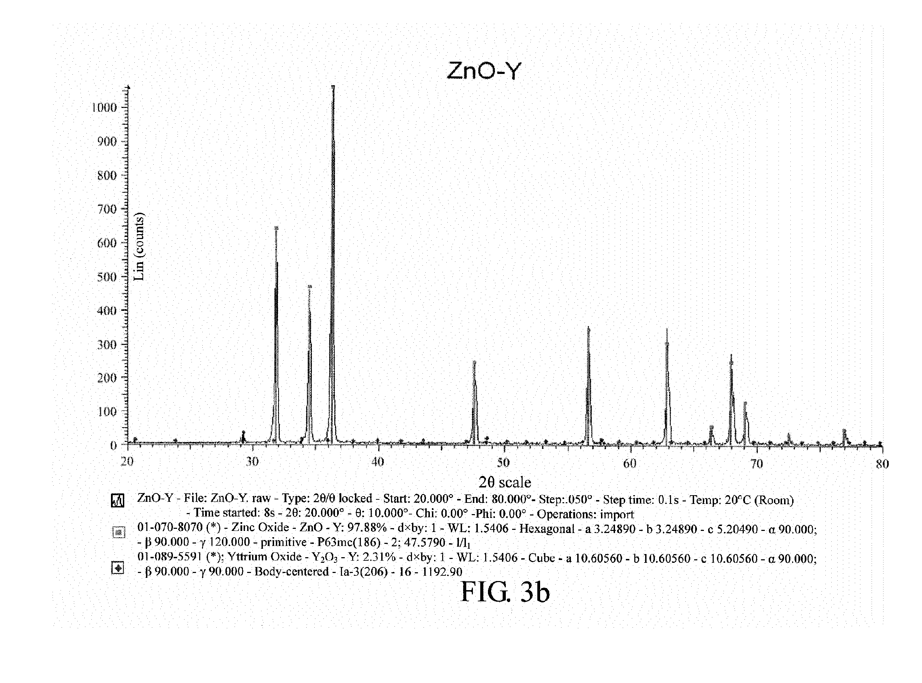

Shown in FIG. 2 that shows the X-ray diffraction pattern of pure ZnO grains. To take ZnO grains doped with 2mol% of Si or Y made by any of the foregoing approaches as an exemplary illustration, the X-ray diffraction pattern thereof obtained by an X-ray diffractometer is shown in FIG. 3a or FIG. 3b respectively. As compared with FIG. 2, the FIG. 3a or FIG. 3b has suggested that Si ions or Y ions are fully dissolved into the lattices of the ZnO grains respectively.

Likewise, ZnO grains doped with 2mol% of doping ions if selected one or more from the group consisting of Ag, Li, Cu, Al, Ce, Co, Cr, In, Ga, La, Y, Nb, Ni, Pr, Sb, Se, Ti, V, W, Zr, Si, Fe and Sn are fully capable of being dissolved into the lattices of the ZnO grains respectively.

Thus, in the Step a) of preparing ZnO grains in advance doped with doping ions, the species and quantity of the doping ions can be selected from an enlarged scope. Consequently, properties of the resultant multilayer chip ZnO varistors, including breakdown voltage, nonlinear coefficient, C value, leakage current, surge-absorbing ability, and ESD-absorbing ability, can be effectively modulated.

### b. Individually preparing a desired high-impedance sintering material

Raw material of a sintering material or glass powder having the composition determined by the desired properties of the resultant ZnO varistor is used. The material includes one or more selected from the group consisting of oxide, rare earth oxide hydroxide, carbonated, and oxalate. The selected raw material after undergoing a series of processing procedures, including mixing, grinding and calcination, is turned into the sintering material. The sintering material is then ground into powder of desired fineness. Therein, the oxide is a mixture of two or more selected from the group consisting of Bi₂O₃, B₂O₃, Sb₂O₃, Co₂O₃, MnO₂, Cr₂O₃, V₂O₅, ZnO, NiO and SiO₂.

Alternatively, pastes prepared with different compositions are mixed, melted in high temperature, water-quenched, oven-dries, and ground into fine glass powder.

Alternatively, nanotechnology is implemented to turn raw materials with different compositions into a sintering material in the form of nanosized powder or into nanosized glass powder.

In the Step b) of preparing a desired high-impedance sintering material, the sintering material with different compositions may be made to endow the ZnO varistors with thermistor properties, inductor properties, capacitor properties, etc., in addition to varistor properties.

### c. Mixing the doped ZnO grains with the high-impedance sintering material into a mixture; processing the mixture into composite ZnO ceramic powders and preparing a slurry composed of the powders combined with a binder and a solvent;

The doped ZnO grains of Step a) and the high-impedance sintering material or glass powder of Step b) mentioned above are properly made according to the desired properties of the resultant multilayer chip ZnO varistors. Then the doped ZnO grains and the sintering material are well mixed into a mixture based on a weight ratio of doped ZnO grains to the sintering material preferably ranging between 45 : 55 and 97.5 : 2.5.

The mixture is processed with an initial sintering and ground by a ground mill to be formed as composite ZnO ceramic powders. Finally, composite ZnO ceramic powders are combined with a binder, a dispersant, a plasticizer, a releasing agent and a solvent to form a kind of slurry for producing green sheet(s) by tape casting.

Known as state of the art, a conventional process at least comprising taping casting, screen printing, stacking and sintering technique is available to produce a multilayer chip ZnO varistors containing Ag/Pd alloy formed as internal electrodes but sintered at firing temperature of 950-1300°C.

Referred to the conventional process for producing multilayer chip ZnO varistors, a casting process used in the manufacture of thin ceramic tapes from ceramic slurry is available to produce green sheet(s) made of the slurry of Step c) by tape casting; a screen printing technique that uses a woven mesh to support an ink-blocking stencil is available to print pure silver (Ag) metal paste onto the surface of green sheet(s) as an internal electrode layer; a stacking process is available that a predetermined number of green sheets having a pure silver internal electrode layer printed thereon are stacked and a predetermined number of green sheets having no internal electrode layer printed thereon are further stacked on the upper and lower sides thereof to form a laminated assembly; and a process of calcination for thermal decomposition of solid materials is available to fire the laminated assembly at ultralow firing temperature of 850-900°C, and finally a process for coating external electrodes is available to make a multilayer chip ZnO varistors containing pure silver (Ag) formed as internal electrodes of the present invention.

### Example 1:

A mixture is prepared by taking 97.5% of ZnO doped with doping irons (which is stamped as sample 02 and hereinafter referred to as ZnO*) well to mix with 0.5% of Bi₂O₃, 1.0% of Sb₂O₃, 0.5% of Co₂O₃ and 0.5% of MnO₂, all based on the mixture by weight.

The ZnO* grains of sample 02 is prepared by immersing fine ZnO powders into a solution containing doping ions of Sn, Al and Si and encompasses 1mol% of ZnO, 0.006mol% of SnO₂, 0.00015mol% of Al₂O₃ and 0.002mol% SiO₂ after sintered at 900°C for two hours.

The mixture after further ground into fine powders was used to make a disc-shaped ZnO varistor with diameter of 8mm under pressure of 1000kg/cm². And then, the produced disc-shaped varistor was sintered at 850°C for five hours to obtain the final product. At last, the varistor properties of the disc-shaped varistor, including breakdown voltage (abbreviated as "BDV"), nonlinear exponent (α) and leakage current (iL), are measured, and the measured results are listed in Table 1.

### Comparative example 1:

Similar to Example 1, except that ZnO grains, which is without doping irons and stamped as sample 01, are substituted for ZnO* grains.
The disc-shaped varistor was tested on varistor properties and the results are listed in Table 1.

**Table 1 : Properties of ZnO Varistors Made of ZnO* Grain or ZnO Grains**

| Sample | BDV (V/mm) | α | iL (µA) |
|---|---|---|---|
| 01 (ZnO) | 1321 | 9.96 | 101.9 |
| 02 (ZnO*) | 871 | 15.50 | 44.6 |

From Table 1, it is learned that the disc-shaped ZnO varistors made of ZnO* grains doped with doping ions has already carried out varistor properties when sintered at 850°C. While the disc-shaped ZnO varistors made of ZnO grains without doping irons has an inferior varistor property thereof.

### Example 2:

The chemical coprecipitation method was used to prepare a sintering material numbered G-100, which has the composition as provided in Table 2 below.

Taking ZnO* grains of example 1 well to mix with the sintering material of G-100 to form a mixture after in advance sintered at 750°C for five hours.

And, the mixture was used to make disc-shaped ZnO varistors under the same conditions as provided in Example 1. The varistors were tested on their varistor properties and the results are listed in Table 3.

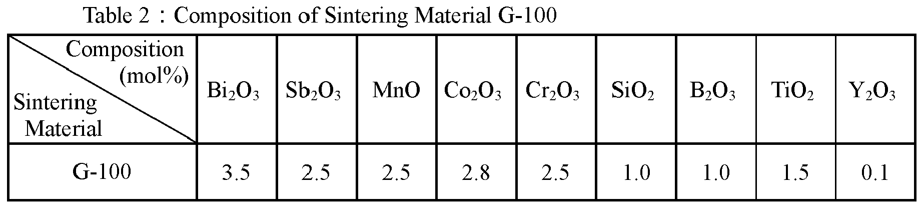

**Table 3 : Properties of ZnO Varistors Made of grains boundaries prepared by chemical coprecipitation**

| | BDV (V/mm) | α | iL (µA) |
|---|---|---|---|
| Before ESD Test | 1139 | 43.01 | 11.0 |
| After ESD test by 30KV strike 200 times | 1166 | 22.07 | 36.9 |

From Table 3, it is learned that the varistor properties, particular in respects of BDV, of disc-shaped ZnO varistors is obviously promoted by preparation of sintering material through chemical coprecipitation method.

### Example 3:

Taking ZnO* grains of Example 1 but sintered at 1,200°C for six hours instead. Further mixing the ZnO* grains of this example with the sintering material of G-100 of Example 2 in a weight ratio of 90:10, 80:20 or 70:30 respectively to form three kinds of mixture after in advance sintered at 800°C for five hours..

And, each mixture was used to make disc-shaped ZnO varistors under the same conditions as provided in Example 1. Each varistor was respectively tested on their varistor properties and the results are listed in Table 4.

**Table 4 : Properties of ZnO varistors varied with the quantity of grain boundaries**

| Weight ratio of ZnO*/sintering material | BDV (V/mm) | α | iL (µA) | Surge (A) |
|---|---|---|---|---|
| 90 : 10 | 421 | 15.50 | 31.4 | 500 |
| 80 : 20 | 337 | 20.32 | 12.4 | 800 |
| 70 : 30 | 339 | 24.15 | 6.50 | 900 |

From Table 4, it is learned that the BDV value of disc-shaped ZnO varistors is obviously reduced by increase of sintering temperature of ZnO* grains doped with doping irons. In addition, the ZnO varistors have their varistor properties varying with how much the quantity of high-impedance sintering material hasl, and the varistor properties of the ZnO varistor can be promoted or adjusted by duly increasing the quantity of high-impedance sintering material.

### Example 4:

The chemical coprecipitation method was used to prepare ZnO* grains of this example having the same composition as that of ZnO* grains of Example 1, but the ZnO* grains of this example have the quantity of doping irons ten times more than that of ZnO* grains of Example 1 after sintered at 1,200°C for two hours instead.

Taking ZnO* grains of this example well to mix with the sintering material of G-100 of Example 2 in a weight ratio of 80:20 to form a mixture after in advance sintered at 800°C for five hours.

And, the mixture was used to make disc-shaped ZnO varistors under the same conditions as provided in Example 1. The varistors were tested on their varistor properties and the results are listed in Table 5.

**Table 5 : Properties of ZnO varistors varied with ZnO* grains prepared by chemical coprecipitation method**

| Weight ratio of ZnO*/sintenng material | BDV (V/mm) | α | iL (µA) | Surge (A) |
|---|---|---|---|---|
| 80 : 20 | 659 | 24.15 | 14.7 | 1400 |

From Table 5, it is learned that the maximum discharge current of disc-shaped ZnO varistors is obviously promoted by use of chemical coprecipitation method to have ZnO* grains doped with doping irons, and the ZnO varistors is also excellent in capacity of surge absorption.

### Example 5:

Taking ZnO* grains of example 1 well to mix with the sintering material of G-100 of example 2 to form a mixture after in advance sintered at 750°C for five hours.

And, the mixture after further finely ground by a ball mill for fifteen minutes or forty minutes respectively was used to make disc-shaped ZnO varistors under the same conditions as provided in Example 1. The varistors were tested on their varistor properties and the results are listed in Table 6.

**Table 6 : Properties of ZnO varistors varied with the level of fineness of ZnO* grains and sintering material**

| Grinding time (minutes) | Before ESD Test | | | | After ESD Test by 30KV (Strike 200 times) | | |
|---|---|---|---|---|---|---|---|
| | BDV (v/mm) | α | I_{L} (µA) | Surge (A) | BDV (v/mm) | α | I_{L} (µA) |
| 15 | 1188 | 36.02 | 14.50 | 2400 | 1166 | 22.07 | 36.90 |
| 40 | 1401 | 46.29 | 7.90 | 2800 | 1443 | 35.00 | 10.80 |

From Table 6, it is learned that the higher level of fineness of ZnO* grains and sintering material is ground by a ball mill, the more preferable promotion of varistor properties, specially in maximum discharge current, of disc-shaped ZnO varistors is obviously reached.

### Example 6:

The ZnO* grains of this example is prepared by immersing fine ZnO powders into a solution containing doping ions of Sn, Al and Si. Then The ZnO* grains are obtained after the ZnO powders are dried and sintered at 900°C for two hours.

Taking ZnO* grains of this example well to mix with the sintering material of G-100 of example 2 to form a mixture after in advance sintered at temperature of 750°C for five hours.

And, a kind of sintered composite ZnO ceramic powders is obtained after the mixture is further finely ground by a ball mill for forty minutes and then completely dried at temperature of 230°C.

The sintered composite ZnO ceramic powders are mixed with appropriate binder, dispersant, plasticizer and organic solvent to form an organic paste. By conventional process for producing multilayer chip ZnO varistor, a layer of green tape is made of the paste by doctor blade technique and each produced green tape may be selectively printed with a pure silver (Ag) internal electrode thereon.

Through three or more layers of green tape are evenly stacked and pressed, a multilayer chip ZnO varistor containing two or more interleaved layers of pure silver (Ag) internal electrodes can be produced after sintered at temperature of 850 °C for three hours.

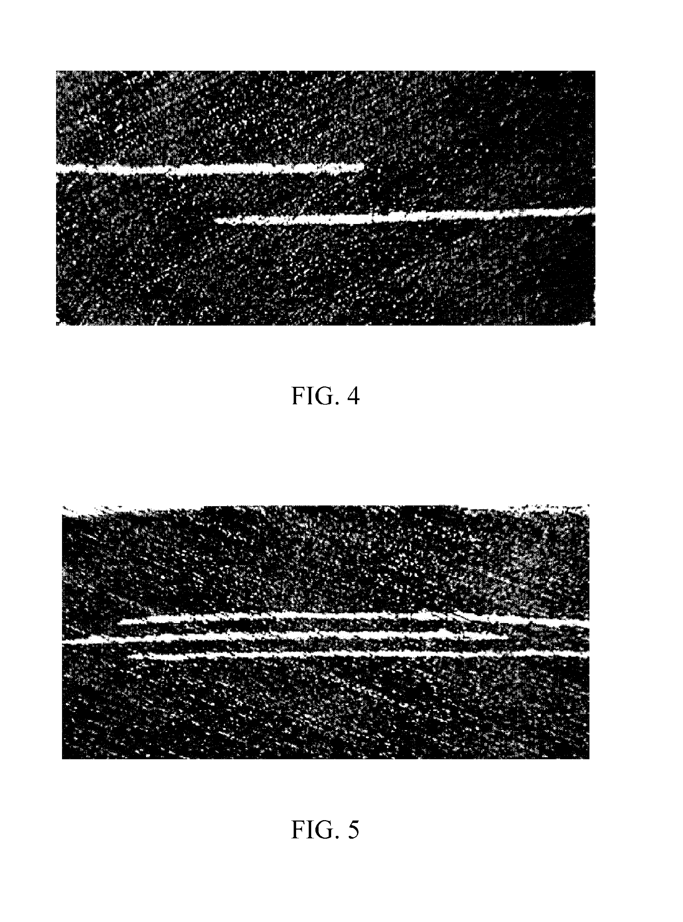

Referred to FIG 4, a multilayer chip ZnO varistor containing two interleaved layers of pure silver (Ag) internal electrodes is produced as a practical embodiment of this example.

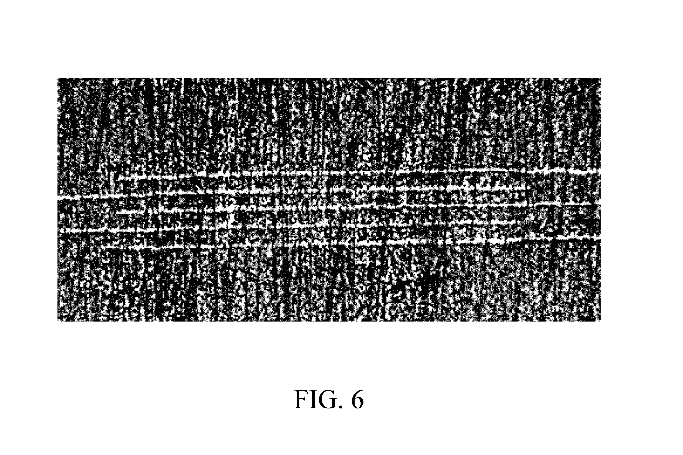

Likewise, referred to FIGS. 5 and 6, a multilayer chip ZnO varistor either containing three or five interleaved layers of pure silver (Ag) internal electrodes is also produced as an available embodiment of this example. In particular, the pure silver (Ag) internal electrodes of the multilayer chip ZnO varistor is always presented in excellent appearance and provided with excellent chemical stability during sintering.

### Example 7:

Similar to Example 6, the multilayer chip ZnO varistor (MLVS) containing pure silver (Ag) internal electrodes is produced to satisfy the MLVS Specification of 0402, 0603, 0805, 1812 and 2220 Series respectively, and each MLVS Series of varistor was tested on its own varistor properties and the results are listed in Tables 7 through 11 respectively.

**Table 7 : Electrical test report of MLVS 0402 Series with Specification 1mm × 0.5mm**

| Before ESD Test | | | | | | | | | | |
|---|---|---|---|---|---|---|---|---|---|---|
| No. | NOR | | | | | REV | | | | |
| | V1 | V2 | dV | α | iL (µA) | V1 | V2 | dV | α | iL (µA) |
| 1 | 64.06 | 59.51 | 4.55 | 31.43 | 1.0 | 64.63 | 59.99 | 4.64 | 31.03 | 1.1 |
| 2 | 66.15 | 61.5 | 4.65 | 31.83 | 0.5 | 66.64 | 61.99 | 4.65 | 31.83 | 0.3 |
| 3 | 65.56 | 61.09 | 4.47 | 32.67 | 0.4 | 66.14 | 61.53 | 4.61 | 32.25 | 0.5 |
| 4 | 63.43 | 59.01 | 4.42 | 32.25 | 0.7 | 63.94 | 59.46 | 4.48 | 31.83 | 0.3 |
| 5 | 59.35 | 55.36 | 3.99 | 33.12 | 0.5 | 59.79 | 55.68 | 4.11 | 32.67 | 0.3 |

| After ESD Test by 8KV (Strike 20 times) | | | | | | | | | | |
|---|---|---|---|---|---|---|---|---|---|---|
| No. | NOR | | | | | REV | | | | |
| | V1 | V2 | dV | α | iL (µA) | V1 | V2 | dV | α | iL (µA) |
| 1 | 65.54 | 58.6 | 6.94 | 22.07 | 14.7 | 65.06 | 57.93 | 7.13 | 20.32 | 16.8 |
| 2 | 66.62 | 59.77 | 6.85 | 22.07 | 9.7 | 66.39 | 59.57 | 6.82 | 22.07 | 9.5 |
| 3 | 65.68 | 58.97 | 6.71 | 22.07 | 7.1 | 65.24 | 58.08 | 7.16 | 20.32 | 11.6 |
| 4 | 62.81 | 55.91 | 6.9 | 20.32 | 14.1 | 61.97 | 54.76 | 7.21 | 18.83 | 17.7 |
| 5 | 59.38 | 53.1 | 6.28 | 22.07 | 11.3 | 59.01 | 52.25 | 6.76 | 20.32 | 14.8 |

**Table 8 : Electrical test report of MLVS 0603 Series**

| Before ESD Test | | | | | | | | | | |
|---|---|---|---|---|---|---|---|---|---|---|
| No. | NOR | | | | | REV | | | | |
| | V1 | V2 | dV | α | iL | V1 | V2 | dV | α | iL |
| 1 | 125.20 | 117.70 | 7.50 | 37.69 | 0.15 | 126.00 | 118.20 | 7.80 | 36.56 | 0.03 |
| 2 | 126.70 | 118.90 | 7.80 | 36.56 | 0.25 | 127.80 | 119.60 | 8.20 | 35.00 | 0.23 |
| 3 | 125.20 | 118.00 | 7.20 | 38.88 | 0.03 | 126.10 | 118.60 | 7.50 | 37.69 | 0.16 |
| 4 | 126.90 | 119.40 | 7.50 | 38.28 | 0.09 | 128.00 | 120.30 | 7.70 | 37.11 | 0.11 |
| 5 | 125.60 | 118.30 | 7.30 | 38.88 | 0.22 | 126.70 | 119.20 | 7.50 | 38.28 | 0.03 |

| After ESD Test by 8KV (Strike 20 times ) | | | | | | | | | | |
|---|---|---|---|---|---|---|---|---|---|---|
| No. | NOR | | | | | REV | | | | |
| | V1 | V2 | dV | α | iL | V1 | V2 | dV | α | iL |
| 1 | 124.20 | 112.60 | 11.60 | 24.15 | 7.13 | 124.70 | 113.10 | 11.60 | 24.15 | 7.26 |
| 2 | 129.60 | 117.90 | 11.70 | 24.39 | 10.77 | 129.40 | 117.10 | 12.30 | 24.15 | 11.70 |
| 3 | 128.00 | 114.50 | 13.50 | 22.07 | 11.30 | 130.10 | 116.50 | 13.60 | 22.07 | 9.88 |
| 4 | 128.40 | 117.30 | 11.10 | 25.62 | 4.09 | 128.50 | 117.70 | 10.80 | 26.44 | 4.20 |
| 5 | 127.50 | 116.50 | 11.00 | 25.62 | 5.52 | 129.40 | 117.80 | 11.60 | 24.63 | 4.56 |

**Table 9 : Electrical test report of MLVS 0805 Series**

| Before SURGE Absorbing Test | | | | | | | | | | |
|---|---|---|---|---|---|---|---|---|---|---|
| No. | NOR | | | | | REV | | | | |
| | V1 | V2 | dV | α | iL | V1 | V2 | dV | α | iL |
| 1 | 40.70 | 38.21 | 2.49 | 36.56 | 2.10 | 40.98 | 38.48 | 2.50 | 37.11 | 1.60 |
| 2 | 39.17 | 36.44 | 2.73 | 32.25 | 3.10 | 39.53 | 36.85 | 2.68 | 33.12 | 2.10 |
| 3 | 39.53 | 37.28 | 2.25 | 39.51 | 0.96 | 39.70 | 37.26 | 2.44 | 36.56 | 0.98 |
| 4 | 38.12 | 35.64 | 2.48 | 34.50 | 1.80 | 38.39 | 35.87 | 2.52 | 34.03 | 1.90 |

| After SURGE Absorbing Test of 150A | | | | | | | | | | |
|---|---|---|---|---|---|---|---|---|---|---|
| No. | NOR | | | | | REV | | | | |
| | V1 | V2 | dV | α | iL | V1 | V2 | dV | α | iL |
| 1 | 43.47 | 40.84 | 2.63 | 37.11 | 5.70 | 41.52 | 38.24 | 3.28 | 28.22 | 5.70 |
| 2 | 42.53 | 39.79 | 2.74 | 35.00 | 4.90 | 40.25 | 36.65 | 3.60 | 24.63 | 7.80 |
| 3 | 42.55 | 39.84 | 2.71 | 35.00 | 4.50 | 40.29 | 36.71 | 3.58 | 24.86 | 11.00 |
| 4 | 40.97 | 38.21 | 2.76 | 33.12 | 6.90 | 38.66 | 34.91 | 3.75 | 24.15 | 10.60 |

**Table 10 : Electrical test report of MLVS 1812 Series**

| Before SURGE Absorbing Test | | | | | | | | | | |
|---|---|---|---|---|---|---|---|---|---|---|
| No. | NOR | | | | | REV | | | | |
| | V1 | V2 | dV | α | iL | V1 | V2 | dV | α | iL |
| 1 | 470 | 449 | 21 | 51.20 | 2.40 | 472 | 450 | 22 | 49.11 | 1.95 |
| 2 | 482 | 465 | 17 | 65.10 | 2.31 | 484 | 466 | 18 | 61.72 | 2.00 |
| 3 | 478 | 458 | 20 | 54.70 | 2.32 | 480 | 460 | 20 | 54.70 | 1.88 |

| After SURGE Absorbing Test of 1300A | | | | | | | | | | |
|---|---|---|---|---|---|---|---|---|---|---|
| No. | NOR | | | | | REV | | | | |
| | V1 | V2 | dV | α | iL | V1 | V2 | dV | α | iL |
| 1 | 471 | 450 | 21 | 51.20 | 2.37 | 472 | 450 | 22 | 49.11 | 1.93 |
| 2 | 483 | 466 | 17 | 65.10 | 2.34 | 484 | 467 | 17 | 65.10 | 1.87 |
| 3 | 479 | 459 | 20 | 54.70 | 2.28 | 480 | 461 | 19 | 57.30 | 1.87 |

**Table 11 : Electrical test report of MLVS 2220 Series**

| Before SURGE Absorbing Test | | | | | | | | | | |
|---|---|---|---|---|---|---|---|---|---|---|
| No. | NOR | | | | | REV | | | | |
| | V1 | V2 | dV | α | iL | V1 | V2 | dV | α | iL |
| 1 | 750 | 687 | 63 | 26.44 | 3.92 | 753 | 689 | 64 | 26.16 | 3.63 |
| 2 | 786 | 703 | 83 | 22.07 | 7.40 | 792 | 707 | 85 | 20.32 | 7.60 |
| 3 | 867 | 776 | 91 | 22.07 | 6.10 | 869 | 777 | 92 | 22.07 | 6.20 |

| After SURGE Absorbing Test of 1500A | | | | | | | | | | |
|---|---|---|---|---|---|---|---|---|---|---|
| No. | NOR | | | | | REV | | | | |
| | V1 | V2 | dV | α | iL | V1 | V2 | dV | α | iL |
| 1 | 739 | 678 | 61 | 27.00 | 4.26 | 741 | 679 | 62 | 26.44 | 3.76 |
| 2 | 745 | 667 | 78 | 22.07 | 6.10 | 745 | 669 | 76 | 22.07 | 5.40 |
| 3 | 834 | 748 | 86 | 22.07 | 5.90 | 837 | 748 | 89 | 22.07 | 5.90 |

From Table 7, it is learned that the MLVS Specification of 0402, 0603, 0805, 1812 and 2220 Series produced by the disclosed process of the present invention may contain pure silver (Ag) internal electrodes and sintered at ultralow firing temperature of 850-900°C as well as provided with excellent performance of electrical properties.

In an further embodiment a basic process of producing a multilayer chip zinc oxide (ZnO) varistor having internal electrodes of pure silver (Ag) comprises:
a) individually preparing ZnO grains that are doped in advance with doping ions, wherein one more doping ions are selected from the group consisting of doping ions of Ag, Li, Cu, Al, Ce, Co, Cr, In, Ga, La, Y, Nb, Ni, Pr, Sb, Se, Ti, V, W, Zr, Si, Fe, and Sn, and wherein doping quantity of the doping ions is less than 10mol% of ZnO;
b) individually preparing a sintering material, wherein the sintering material is any combination of oxides selected from the group consisting of Bi₂O₃, B₂O₃, Sb₂O₃,Co₂O₃, MnO₂, Cr₂O₃, V₂O₅, ZnO, NiO and SiO₂;

Subsequently, the doped ZnO grains are mixed with the sintering material into a mixture based on a weight ratio ranging between 45 : 55 and 97.5 : 2.5. The mixture is processed into a composite ZnO ceramic powder through initial sintering and subsequent grinding. A green sheet is prepared from a slurry composed of the composite ZnO ceramic powder combined with a binder and a solvent.

Finally, a multilayer chip ZnO varistor is produced from said green sheet through sintering at a temperature lower than the melting point of silver, preferably at 800 to 950°C and more preferably at 850 to 900°C.

Preferably, the doping quantity is less then 2mol% of ZnO.

The step of preparing doped ZnO grains may comprise obtaining a coprecipitate containing ZnO grains and doping ions, thermal decomposition of the coprecipitate, and grinding the calcined coprecipitate into powder. The coprecipitate can be obtained e.g. through nanotechnology of coprecipitation method or a sol-gel process.

In addition or alternatively, the step of preparing doped ZnO grains may comprise immersing ZnO powder into a solution containing doping ions, drying the ZnO powder covered with said doping ions from the solution, thermal decomposition of the ZnO powder and grinding the calcined ZnO powder to obtain doped ZnO grains.

## Claims

1. A process for producing a multilayer chip zinc oxide (ZnO) varistor containing pure silver (Ag) formed as internal electrodes and firing at ultralow temperatures, comprising the steps of:
a) individually preparing ZnO grains in advance doped with doping ions, wherein one more species of doping ions are selected from the group consisting of Ag, Li, Cu, Al, Ce, Co, Cr, In, Ga, La, Y, Nb, Ni, Pr, Sb, Se, Ti, V, W, Zr, Si, Fe and Sn, and wherein doping quantity of the doping ions is less than 10mol% of ZnO;
b) individually preparing a desired high-impedance sintering material, wherein the sintering material is any combination of oxides selected from the group consisting of Bi₂O₃, B₂O₃, Sb₂O₃, Co₂O₃, MnO₂, Cr₂O₃, V₂O₅, ZnO, NiO and SiO₂;
c) well mixing the doped ZnO grains of Step a) with the high-impedance sintering material of Step b) into a mixture based on a weight ratio ranging between 45 : 55 and 97.5 : 2.5; processing the mixture into composite ZnO ceramic powders after through an initial sintering and a finely grinding later; and preparing a slurry for producing green sheet(s) composed of the powders combined with a binder and a solvent; and
d) producing a multilayer chip ZnO varistors containing pure silver (Ag) formed as internal electrodes but sintered at ultralow firing temperature of 850-900°C through a conventional process available to produce a multilayer chip ZnO varistors containing Ag/Pd alloy formed as internal electrodes.

2. The process for producing the varistor as defined in Claim 1, wherein the doping quantity of the doping ions of Step a) is less then 2mol% of ZnO.

3. The process for producing the varistor as defined in Claim 1 or 2, wherein the process for preparing ZnO grains doped with doping ions of Step b) comprises to obtain a coprecipitate containing ZnO grains and doping ions through nanotechnology of coprecipitation method or sol-gel process, to undergo a thermal decomposition to the coprecipitate, and to finely grind the calcined coprecipitate into powders.

4. The process for producing the varistor as defined in Claim 1 or 2, wherein the process for preparing ZnO grains doped with doping ions of Step b) comprises to immerse fine ZnO powder into a solution containing doping ions, to dry the ZnO powder covered with doping ions, to undergo a thermal decomposition to the ZnO powder and to finely grind the calcined ZnO powder.

5. The process for producing the varistor as defined in one of Claims 1 to 4, wherein three or more layers of green sheet and two or more interleaved layers of pure silver as internal electrodes are stacked, pressed and sintered to form a multilayer ZnO varistor.
